# EUROPEAN PATENT SPECIFICATION

(11) **EP 3 322 307 B1**
(45) Date of publication and mention of the grant of the patent: **03.03.2021**
(21) Application number: 16738805.7
(22) Date of filing: 14.07.2016
(51) Int. Cl.: A23K 50/48, A23K 20/163

(54) **SOLIDS IN GRAVY FOOD COMPOSITION**
FESTSTOFFE IN EINER SAUCENARTIGEN NAHRUNGSMITTELZUSAMMENSETZUNG
MATIÈRES SOLIDES DANS UNE COMPOSITION ALIMENTAIRE DE SAUCE

(30) Priority: 15.07.2015 GB 201512385
(43) Date of publication of application: 23.05.2018
(73) Proprietor: Mars, Incorporated, McLean, VA 22101 (US)
(72) Inventor: Koliandris, Andreas, Aimargues, 30470 (FR); Alexa, Raluca-Ioana, Darmstadt, 64295 (DE); Zheng, Xiaoxue, Shenzhen, Yantian District 518083 (CN)
(74) Representative: Carpmaels & Ransford LLP
(86) International application number: PCT/EP2016/066830
(87) International publication number: WO 2017/009439

(56) References cited:
- WO-A1-2010/104572
- US-A1- 2012 115 964
- US-A1- 2014 154 390
- L. Zhong ET AL: "Rheological behavior of xanthan gum solution related to shear thinning fluid delivery for subsurface remediation", Journal of Hazardous Materials, vol. 244-245, 1 January 2013 (2013-01-01), pages 160-170, XP55580351, AMSTERDAM, NL ISSN: 0304-3894, DOI: 10.1016/j.jhazmat.2012.11.028

## Description

The present invention relates to a method of making a semi-finished pet food as well as such a pet food as part of a process of making a ready-to-eat pet food. The invention also relates to the ready-to-eat pet food.

Packaged moist and wet pet food products are popular with both pet animals and their carers. Such products provide a complete and balanced diet which are intended to reflect the pet animal's "natural" diet from days when the pet hunted its own live food.

A two textured pet food, such as solids in gravy is also popular as it provides the animal with desirable texture, which is also pleasing to the eye for its carer.

WO 2010/104572 A1 describes a chunks in gravy food composition comprising chunks in gravy in a chunks to gravy ratio of from about 25:75 to about 60:40, wherein the gravy comprises from about 0.01 to about 1 % guar and from about 0.01 to about 1% deacetylated xanthan. The gravy maintains its viscosity during the manufacturing process and ensures an even distribution of the chunks in the chunks in gravy food composition.

US 2014/0154390 A1 provides pseudo-loaf food compositions comprising meat analog chunks and gravy, the gravy comprising a thickener selected from the group consisting of a gum present in the gravy in an amount from about 0.5 to about 3.0% of the gravy by weight, a starch present in the gravy in an amount from about 2.0 to about 9.0% of the gravy by weight, and combinations thereof.

US 2012/0115964 A1 describes a composition comprising at least about 0.2% w/w xanthan gum and at least about 6% w/w of a swellable particulate to cause an increase in viscosity.

Packaged pet foods enable individual/specified serving amounts which assist the carer in not overfeeding their pet animal.

It is therefore desirable to improve methods of manufacture and use of such two textured pet food, including such pet food when it is packaged.

The present invention meets these aims.

A first aspect of the present invention relates to a method of making a semi-finished pet food, the method comprising:
from a first source comprising solid food pieces, adding to a package a desired amount of solid food pieces,
from a separate second source comprising gravy, adding to the same package a desired amount of gravy,
wherein the gravy comprises at least 0.5% modified xanthan, at least 85% moisture and flavouring and wherein the modified xanthan is hydraxan and the gravy has a viscosity of 0.4 Pas or below (400 centipoise (cp) or below) when measured at a temperature between 18-22°C at 20rpm with a Brookfield viscometer.

According to the first aspect of the invention, the pet food is semi-finished. This term means that the food is not ready to be eaten by the pet. One reason for the food being semi-finished may be that it has not been through a process (termed, for example, sterilisation, retortion or autoclave) to kill any bacteria present and make the product shelf-stable.

In the definition of the present invention, the viscosity is given as centipoise (cp), which is measured at 20rpm with a Brookfield viscometer. The temperature should be between 18-22°C. The process requires 1 minute from the start of the process after which a single cp measurement is taken.

The gravy may contain up to 5% salt, in particular from 0.1 to 4% salt, more particularly 0.5% to 2% salt. The gravy may contain flavouring (typically up to 1.0%) and/or colouring (typically up to 3%, which is often caramel). It may also contain one or more other hydrocolloids, such as starch, guar gum or unmodified xanthan. The gravy of the invention, which contains modified xanthan will need less or no other hydrocolloid compared to a gravy which does not contain modified xanthan.

The solid food pieces and gravy being added to the package may be in any order or at the same time. Typically the solid food pieces are added first for more convenient filling. A benefit of this method relates to the utilisation of what is known in the art as a dual stage filling process. Such a filling technique is related to the process steps and not the solids or gravy making steps.
- ***Single stage fill** - gravy and solids are mixed together before being filled into final packaging structure.*
- ***Dual stage fill** - gravy and solids are not mixed together before filling but instead, solids are added to final packaging structure and then gravy is added using separate filler on top of the solids already in the can (or in the alternate order).*

A disadvantage of the single stage fill is that because the solids and gravy are mixed together before filling the package, it is extremely difficult to accurately measure out the appropriate amount/ratio of solids and gravy for each package.

A disadvantage of the dual stage fill is the problem of using thick gravy, which is required in the end product. A process which uses thick gravy takes a longer time and is often more difficult/messy, in particular with regard to any required sealing of the package. The present invention overcomes this problem by utilisation of a modified xanthan material which when mixed with the other ingredients for the gravy produces a gravy with a viscosity of 0.4 Pas or below (400cp or below). This enables filling of the package with accurate amounts of solids and gravy by the dual stage filling process and to enable efficient filling. The presence of the modified xanthan, with the other ingredients, as set out in the claims, produces, when subject to appropriate sterilisation conditions, a solids in gravy pet food where the gravy has a viscosity of over 0.6 Pas (over 600cp). Such a gravy has a viscosity able to support the solids through the product and produce the aesthetically desirable ready-to-eat solids in gravy pet food.

The food product is a wet food product containing (as a whole product) at least 85% moisture, preferably at least 90%, at least 93% or at least 95% moisture.

The modified xanthan, when mixed with fluid such as water or gravy ingredients, has a low viscosity. The modified xanthan according to the present invention is hydraxan. Details of the modified xanthan according to the present invention can be found in WO2006/065136.

This invention can utilise the invention in WO 2006/05136, which reads:

A ready water-dispersible particulate composition comprising by weight of dry matter at least 10%, preferably at least 20% of xanthan gum and 0-40% of starch, said composition being characterised in that the xanthan gum present in the composition can be dispersed completely within 2 minutes in distilled water of 25°C at a concentration of 0.7% based on the dry weight of xanthan using a method comprising introducing 500 ml of distilled water to a beaker of 1000 ml, stirring with a stirrer with a four bladed impeller with a diameter of 5 cm, operating at fixed rate of 300 rpm and adding the xanthan containing particulate composition to give a concentration of 0.7% based on the dry weight of xanthan, said composition further being characterised in that when subjected to a first viscosity measurement as described in Section 172.695, Title 21, Volume 3 of the Code of Federal Regulations of the US Food and Drug Administration it yields a viscosity of less than 500 mPas at 23.8°C, said first viscosity measurement comprising the steps of:
a. adding the composition to an aqueous solution containing 1 wt% potassium chloride to give an aqueous composition containing 1 wt% xanthan gum;
b. stirring for 2 hours; and
c. determining the viscosity of the stirred aqueous composition by Brookfield viscometer Model LVF or equivalent using a No. 3 spindle at 60 rpm;
and wherein said aqueous stirred composition when subjected to a second viscosity measurement yields viscosity of at least 600 mPas at 23.8°C, said second viscosity measurement comprising the steps of:
a. heating the stirred aqueous composition immediately after the first viscosity measurement to a temperature of 100°C;
b. maintaining a temperature of 100°C for one minute;
c. cooling to 23.8°C within 120 ± 10 minutes; and
determining the viscosity by Brookfield viscometer Model LVF or equivalent using a No. 3 spindle at 60 rpm.

The composition may have a first viscosity measurement of less than 400 mPas at 23.8°C.

When subjected to a first viscosity measurement and a second viscosity measurement as directly above, the composition may yield a viscosity from the second viscosity measurement that is at least 50% higher than the viscosity from the first viscosity measurement, the observed viscosity increase being largely attributable to the xanthan gum contained in the composition.

The composition may be characterised in that the dispersion obtained after the 2 minutes of stirring following xanthan addition exhibits a viscosity of at least 2000 mPas at 25°C, said viscosity being measured by a Brookfield model LVF viscometer or equivalent using spindle 3 at a rotational speed of 12 rpm.

The dispersion obtained after the 2 minutes of stirring may show a reduction in viscosity to one fifth or less of the original value when solid NaCl is added and fully dissolved to give an iconic strength of 0.05 M.

The viscosity of the dispersion obtained after the 2 minutes of stirring may not increase by more than 100% on further stirring for 20 minutes.

The xanthan may be prepared by a process of manufacturing a readily water-dispersible particulate composition containing at least 10% xanthan gum by weight of dry matter, said process comprising:
a. extruding a mixture containing between 20 and 60 wt% water and at least 10% of xanthan gum and 0-40% starch by weight of dry matter at a temperature of at least 60°C;
b. drying the resulting extrudate; and
c. converting the extrudate into a particulate composition prior, during or after the drying,
wherein no adipoyl chloride is added during steps a. and b.

The hydraxan used in the present invention is known in the art. Xanthan, a polysaccharide secreted by the bacterium *Xanthomonas campestris* is composed of pentasaccharide repeat units. Xanthan is a known food thickening agent and a stabiliser in cosmetic products. In a liquid, such as a gravy (described herein) xanthan thickens to a viscosity (over 0.6 Pas, i.e. over 600cp) which does not allow for convenient, clean use in a dual stage filling process as described above.

The hydraxan used in the present invention is a powder. When mixed with a liquid (such as liquid of the gravy of the present invention) it has a viscosity enabling convenient, clean use of the single and dual stage filling process. The viscosity is typically 0.4 Pas or below (400cp or below).

The hydraxan used in the present invention can easily be obtained from xanthan itself according to methods known in the art for example WO 2006/065136. Xanthan powder can be mixed with water and placed into a twin screw extruder. The product is face cut at the die. The product is then dried and milled to a fine powder.

At least five sources of xanthan have been used by the present inventors. Three have been from traditional manufacturers (Kelco, Danisco, Cargill) and two others. The process is successful with all five xanthans. The modified xanthan according to the invention is termed hydraxan. This term is used to describe the modified xanthan as described in WO 2006/065136.

The process for making modified xanthan is described as follows:
Co-rotating twin screw extruders were used. A small Clextral (BC21) and the Thermo Fisher Prism and two larger capacity Clextral extruders were used. Maximum outputs were 50kg/hr though the process can be run at higher throughputs. The experimental samples supplied were run at 3kg/hr on the Prism extruder. When the process was run at up to 50kg/hr in the Clextral pilot plant to facilitate handling and drying the material was face cut at the die.

The process is robust. There are a number of process variables which have to be considered:
(i) Screw configuration: So far this has been simple with mainly positive conveying elements and a single reverse element.
(ii) Screw speed: This is not a critical variable. For the supplied sample this was 300 rpm.
(iii) Dies: Ribbon, circular and multihole dies have been used. A ribbon die has been used as the large surface area facilates drying. In the larger scale trial a two hole die was used and, as mentioned above, the product was face cut at the die.
(iv) Water/powder ratio: This variable determines the mechanical energy. For the sample supplied the ratio was 0.8g water/g solids. The water includes both added water and the approximately 10% water present in the native xanthan.
(v) Heater temperatures: This is not critical. Generally the temperature at the extruder die is maintained below 100C. The temperatures for the ten zones (feed end first) was 30, 30, 30, 30, 30, 30, 50, 50, 80, 90 (°C). There is almost certainly no need to use such a long screw/barrel because the first five elements only have a conveying function.
(vi) Drying: The material was dried in a laboratory oven set at 70°C (not critical).
(vii) Milling and particle size: The ribbons supplied were milled without any problems and without any sieving. Typically we have sieved to a size range of 250-425 microns.

The package of the pet food is preferably metal and/or plastic and/or paper, such as a metal and/or plastic tray with a lid, a can (or tin), a pouch, in particular a flexifoil pouch which is emptied from a single end. The package may be paper (including cardboard or a paper based material), optionally with a plastic lining. In more detail, the package may be a traditional shaped can (or tin) made of metal (typically steel-based) or plastic-based. It may be in the form of a tray which may be metal (typically aluminium-based) or plastic-based or purely plastic. Any of the above may also have a coating layer, typically plastic based, or either the inside or the outside of the package.

Pouch packagings are currently popular, in particular for single servings of pet food. The invention includes such a pouch packaging. Such pouches may be metal-based (typically aluminium) or plastic-based. The pouch may have two or more layers, for example metal (e.g. aluminium)-based, with an inner plastic layer, such as polypropylene. The single or dual-layer pouch may also have a third layer, such as a plastic coating, such as polyester. Such a pouch may be referred to as a 3-ply laminate. An example of a 3-ply laminate pouch is an outer layer of polyester, a middle layer of aluminium and an inner layer of polypropylene. The polypropene is in contact with the pet food. A laminate with more than 3 layers or less than 3 layers may be used. Other plastics may be used instead of the polypropylene and/or polyester mentioned above.

The package may hold a single serving of food or multiple servings. A single serving is preferred. Solids in gravy pet foods are typically produced by making a fluid gravy using guar and xanthan as gum ingredients.

In the present invention, the solids in gravy are typically in a ratio of from about 25:75 to about 60:40. The solids to gravy ratio may be from about 30:70, 35:65, 40:60, 45:55, 50:50 and 50:45.

The solid food pieces can be any known to the skilled person. The solid pieces may be chunks known in the art. They may include meat, including real meat, real fish, a meat analogue, vegetable or a combination thereof, including meat, meat by-products, blood, cereals, vegetable protein extracts etc. Methods for making the solid food pieces are described in prior patent filings, such as US 5,567,466 and US 6,379,738. The solid food pieces may vary in shape and size, depending on the animal and breed that the product is intended for. The type, age, health, size and sex of the animal will influence the desired solids size. For example, a typical product may be 10-80mm, preferably 20-40mm on the longest side for a dog. Solids sizes for cats typically range from 3-30mm, preferably 8-20mm on the longest side. The solids may be in the form of a chunk, regular sized chunk or an irregular shaped chunk. The solids, such as chunks may be termed a meat-like chunk. Any solid, chunk or meat like chunk may have a fibrous or a fibrous-looking texture.

Fibrous meat-like chunks (with or without meat) have improved fibre definition (usually small diameter fibres) that afford the product a realistic meat-like image. Examples of solid food pieces in a pet food are described in, for example, US 4247562, EP-A-2406138, WO 2001047371, US 4791002 and EP 2406138.

The solids and/or gravy of the product may include additional ingredients such as vitamins, minerals, amino acids, nucleic acids, fillers, palatability enhancers, binding agents, flavours, stabilisers, emulsifiers, sweeteners, colorants, buffers, salts, coatings, condiments, preservatives etc. The pet food product of the present invention may provide a complete and balanced diet for the animal, according to the Association of American Food Control Officials.

The present invention has benefits over the prior art.

These include the ability to use a low viscous gravy in a dual stage filling process in order to produce, cleanly and neatly, with efficiency and little waste, a semi-finished pet food comprising an accurate and predetermined amount of solids and of gravy. During this time, the gravy has a low viscosity of 0.4 Pas or below (400cp or below).

Once the appropriate quantities of ingredients (solids and gravy have been added to the package), the package is preferably sealed and the sealed package undergoes a sterilisation process in order to produce the final ready-to-eat pet food. During sterilisation, the modified form of the xanthan breaks down producing a product containing unmodified xanthan in the gravy, resulting in the gravy having a viscosity of over 0.6 Pas (over 600cp). As a result, a ready-to-eat pet food is produced where the viscosity of the gravy is developed during sterilisation in order to keep the solids evenly dispersed in the gravy and produce a desirable and aesthetically pleasing product.

A second aspect of the invention relates to the semi-finished pet food, before sterilisation. The semi-finished food comprises solids and gravy in a package, wherein the gravy comprises at least 0.5% modified xanthan, at least 85% moisture, flavouring and wherein the modified xanthan is hydraxan and the gravy has a viscosity of 0.4 Pas or below (400cp or below) when measured at a temperature between 18-22°C at 20rpm with a Brookfield viscometer.

The semi-finished pet food is in a package. Preferably the package is sealed. All preferred features of the first aspect of the invention also apply to the second.

The semi-finished pet food of the second aspect of the invention may be made by a method according to the first aspect of the invention.

A third aspect of the invention relates to a method of processing the semi-finished pet food of the second aspect of the invention to produce a ready-to-eat pet food product, the method comprising subjecting the semi-finished pet food of the second aspect of the invention, to a temperature of between 110°C to 140°C for at least 15 minutes.

All preferred features of the first and second aspects of the invention also apply to the third.

The method of the third aspect of the invention produces a ready-to-eat pet food product which is here defined as the fourth aspect of the invention.

Such a fourth aspect of the invention is to a ready-to-eat pet food composition comprising solid food pieces and gravy in a package wherein the gravy comprises at least 0.5% xanthan, at least 85% moisture, flavouring and wherein the modified xanthan is hydraxan and the gravy has a viscosity of over 0.6 Pas (over 600cp). In the ready-to-eat product, at least some and preferably over 80% of the xanthan is unmodified and has been changed to being unmodified by the processing conditions as set out according to the third aspect of the invention.

All preferred features of the first aspect of the invention also apply to the fourth.

A typical gravy recipe known in the art (to make an intermediate product before sterilisation) which does not meet the benefits of the present invention may be as follows:
0-0.2% xanthan
0-0.2% guar
0-8% starchoptional 0-3% caramel (colouring)
optional flavouring
remainder water.

In contrast, an example of a recipe for gravy (to make an intermediate product before sterilisation) according to the claimed invention may be as follows:
0.5-1.5% hydraxan
0.1-3% salt
optional 0-3% caramel (colouring)
optional flavouring
remainder water.

A particular benefit of the ready-to-eat pet food of the present invention is the improved release from the packaging. There is significant improvement in the release of the pet food from the packaging resulting in a cleaner, less messy experience for the owner, less waste due to the pet food being left in the pouch and a cleaner waste product for the bin (less waste and less smell due to less food remaining in the packaging). The usual way to address the problem of food remaining in the packaging is to improve the packaging. It is unusual and unexpected that a change in the characteristics of the recipe can result in an improvement in the release of the pet food. The present invention achieves this benefit.

In order to evaluate product release from a package a reproducible test method is required.

Such a test method was developed as described below. This method reduces the personal handling/interaction between any individual to reduce differences seen in the results between packages.

A laboratory test was developed, based on a semi-automated method, as follows;
- the packages are opened manually and fixed to the tester, in a manner where no content spills or leaves the package
- the total weight of the package is recorded
- the automated cycle is started, optionally by a single switch or button
   - the fixed package is moved, each by the same route and timing, to an "upright" position (bottom up)
   - the package is held in this position for a defined holding time to release the pet food
   - optionally moving the package back to the original starting position
   - weighing the remaining weight (packaging plus remaining pet food) or weighing the released pet food
- recording the delta weight, which is in the form of the remaining pet food in the packaging (equivalent to the pet food released) or which is in the form of the released pet food
- it is recommended to measure a minimum of 20 packages each (test package/pet food vs the benchmark packages/pet food).

The present invention is described by reference to the following non-limiting examples.

### Example 1

The following table shows details of the modified xanthan (in this case hydraxan) and salt concentration of product with the initial filling viscosity in the gravy during the filling process (to form the semi-finished pet food) and the viscosity after sterilisation, that is the viscosity of the gravy in the ready-to-eat pet food.

| **hydraxan %** | **Salt NaCl %** | **Starch %** | **Filling Viscosity (Pas)** | **Filling Viscosity (cp)** | **Viscosity 2W* after sterilization (Pas)** | **Viscosity 2W* after sterilization (cp)** |
|---|---|---|---|---|---|---|
| 0.7 | 0.1 | 5 | 0.104 | 104 | 1.400 | 1400 |
| 0.7 | 0.3 | 5 | 0.069 | 69 | 1.355 | 1355 |
| 0.6 | 0.3 | 0 | 0.050 | 50 | 0.663 | 663 |
| 0.6 | 0.1 | 0 | 0.061 | 61 | 0.615 | 615 |
| 0.9 | 0.3 | 0 | 0.156 | 156 | 1.945 | 1945 |
| 0.9 | 0.3 | 5 | 0.156 | 156 | 2.492 | 2492 |
| 0.6 | 0.1 | 5 | 0.071 | 71 | 0.992 | 992 |
| 0.8 | 0.3 | 5 | 0.087 | 87 | 1.285 | 1285 |
| 0.8 | 0.3 | 0 | 0.102 | 102 | 1.165 | 1165 |
| 0.7 | 0.1 | 0 | 0.143 | 143 | 0.840 | 840 |
| 0.6 | 0.3 | 5 | 0.054 | 54 | 0.760 | 760 |
| 0.8 | 0.1 | 0 | 0.159 | 159 | 1.223 | 1223 |
| 0.7 | 0.3 | 0 | 0.080 | 80 | 0.957 | 957 |
| 0.9 | 0.1 | 5 | 0.213 | 213 | 2.122 | 2122 |
| 0.8 | 0.1 | 5 | 0.153 | 153 | 1.593 | 1593 |

| | | | | | | |
|---|---|---|---|---|---|---|
| *2w is 2 weeks after production. | | | | | | |

Each of the above products also contained 0.6% of the same caramel, for colouring and the remainder of the product, in each case, is water.

As can be seen, this table shows that the modified xanthan makes low viscosity gravy, allowing clean and easy filling of the packaging, returning to high viscosity as normal xanthan for end product ready-to-eat gravy aesthetics and functionality.

### Example 2

The following table shows details of release information of the ready-to-eat pet food from a package. In each case, the package was the same material, the same size and dimensions and contained a similar, if not identical, amount of product.

A ready-to-eat pet food according to the fourth aspect of the invention was prepared. In the table below, details are given of the gravy ingredients in making the product. The product was made according to the first aspect of the invention and sterilised according to the third aspect of the invention. In addition to the product details listed below in the table, each product had water as the remaining ingredient. The result produced a ready-to-eat pet food according to the fourth aspect of the invention. The resulting ready-to-eat pet food (according to the fourth aspect) was tested for product release. The test for product release was as defined in the text above which describes a reproducible test method. In the test, the package was held in the upright position (bottom up) for a period of 10 seconds. The delta measurement was achieved by weighing the remaining weight (packaging plus remaining product). In the method, 50 packages of the "test" were measured each, in comparison to 50 packages of the control.

| Product | Pouch Release Category |
|---|---|
| control (4% starch, 0.1% xanthan) | C |
| 0.9% hydraxan, 0.3% salt | B |
| 0.9% hydraxan, 0.2% salt | A |
| 0.9% hydraxan, 0.1% salt | A |
| 0.75% hydraxan, 0.3% salt, 0.5% starch | B |

Category details:
A: Pouch release of 60% or over
B: Pouch release of 50% or over
C: Pouch release of 40% or over

## Claims

1. A method of making a semi-finished pet food, the method comprising:
from a first source comprising solid food pieces, adding to a package a desired amount of solid food pieces,
from a separate second source comprising gravy, adding to the package a desired amount of gravy,
wherein the gravy comprises at least 0.5% modified xanthan, at least 85% moisture, and wherein the modified xanthan is hydraxan and the gravy has a viscosity of 0.4 Pas or below (400 centipoise (cp) or below) when measured at a temperature between 18-22°C at 20rpm with a Brookfield viscometer.

2. The method of claim 1, wherein the package comprises metal and/or plastic.

3. The method of claim 1 or claim 2, wherein the solid pieces to gravy ratio is from about 25:75 to about 60:40.

4. A semi-finished pet food comprising:
solid food pieces and
gravy,
in a package,
wherein the gravy comprises at least 0.5% or more modified xanthan, at least 85% moisture, flavouring and wherein the modified xanthan is hydraxan and the gravy has a viscosity of 0.4 Pas or below (400cp or below) when measured at a temperature between 18-22°C at 20rpm with a Brookfield viscometer.

5. The semi-finished pet food of claim 4, wherein the product is made by the method as set out in any one of claims 1 to 3.

6. A method of processing the semi-finished pet food of claim 4 or claim 5 to produce a ready-to-eat pet food, the method comprising subjecting the semi-finished pet food, as set out in claim 4 or claim 5 to a temperature of between 110°C to 140°C for at least 15 minutes.

7. A ready-to-eat pet food made by the method as set out in claim 6.

## Patentansprüche

1. Verfahren zur Herstellung eines halbfertigen Haustierfutters, wobei das Verfahren Folgendes umfasst:
Zugeben einer gewünschten Menge fester Futterstücke aus einer ersten Quelle, die feste Futterstücke umfasst, zu einer Verpackung,
Zugeben einer gewünschten Menge Soße aus einer separaten zweiten Quelle, die Soße umfasst, zu der Verpackung,
wobei die Soße mindestens 0,5 % modifiziertes Xanthan und mindestens 85 % Feuchtigkeit umfasst und wobei es sich bei dem modifizierten Xanthan um Hydraxan handelt und die Soße bei Messung bei einer Temperatur zwischen 18-22 °C bei 20 U/min mit einem Brookfield-Viskosimeter eine Viskosität von 0,4 Pas oder weniger (400 Centipoise (cp) oder weniger) aufweist.

2. Verfahren nach Anspruch 1, wobei die Verpackung Metall und/oder Kunststoff umfasst.

3. Verfahren nach Anspruch 1 oder Anspruch 2, wobei das Verhältnis von festen Stücken zu Soße etwa 25:75 bis etwa 60:40 beträgt.

4. Halbfertiges Haustierfutter, umfassend:
feste Futterstücke und
Soße
in einer Verpackung,
wobei die Soße mindestens 0,5 % modifiziertes Xanthan und mindestens 85 % Feuchtigkeit umfasst und wobei es sich bei dem modifizierten Xanthan um Hydraxan handelt und die Soße bei Messung bei einer Temperatur zwischen 18-22 °C bei 20 U/min mit einem Brookfield-Viskosimeter eine Viskosität von 0,4 Pas oder weniger (400 cp oder weniger) aufweist.

5. Halbfertiges Haustierfutter nach Anspruch 4, wobei das Produkt nach dem Verfahren gemäß einem der Ansprüche 1 bis 3 hergestellt wird.

6. Verfahren zur Verarbeitung des halbfertigen Haustierfutters nach Anspruch 4 oder Anspruch 5 zur Herstellung eines fressfertigen Haustierfutters, bei dem man das halbfertige Haustierfutter gemäß Anspruch 4 oder Anspruch 5 über einen Zeitraum von mindestens 15 Minuten einer Temperatur zwischen 110 °C bis 140 °C aussetzt.

7. Fressfertiges Haustierfutter, hergestellt nach dem Verfahren gemäß Anspruch 6.

## Revendications

1. Procédé de fabrication d'un produit alimentaire semi-fini pour animal domestique, le procédé comprenant :
à partir d'une première source comprenant des morceaux solides de produit alimentaire, l'ajout à un emballage d'une quantité souhaitée de morceaux solides de produit alimentaire,
à partir d'une deuxième source distincte comprenant de la sauce, l'ajout à l'emballage d'une quantité souhaitée de sauce,
la sauce comprenant au moins 0,5 % de xanthane modifié, au moins 85 % d'humidité, et le xanthane modifié étant un hydraxane et la sauce possédant une viscosité de 0,4 Pas ou moins (400 centipoises (cp) ou moins) lorsqu'elle est mesurée à une température comprise entre 18 et 22 °C à 20 tpm avec un viscosimètre Brookfield.

2. Procédé selon la revendication 1, l'emballage comprenant du métal et/ou du plastique.

3. Procédé selon la revendication 1 ou la revendication 2, le rapport de morceaux solides sur sauce étant d'environ 25:75 à environ 60:40.

4. Produit alimentaire semi-fini pour animal domestique comprenant :
des morceaux solides de produits alimentaires et
de la sauce,
dans un emballage,
la sauce comprenant au moins 0,5 % ou plus de xanthane modifié, au moins 85 % d'humidité, un arôme et le xanthane modifié étant un hydraxane et la sauce possédant une viscosité de 0,4 Pas ou moins (400 cp ou moins) lorsqu'elle est mesurée à une température comprise entre 18 et 22 °C à 20 tpm avec un viscosimètre Brookfield.

5. Produit alimentaire semi-fini pour animal domestique selon la revendication 4, le produit étant fabriqué par le procédé tel qu'établi dans l'une quelconque des revendications 1 à 3.

6. Procédé de traitement du produit alimentaire semi-fini pour animal domestique selon la revendication 4 ou la revendication 5 pour produire un produit alimentaire pour animal domestique prêt-à-manger, le procédé comprenant la soumission du produit alimentaire semi-fini pour animal domestique tel qu'établi dans la revendication 4 ou la revendication 5 à une température comprise entre 110 °C et 140 °C pendant au moins 15 minutes.

7. Produit alimentaire pour animal domestique prêt-à-manger fabriqué par le procédé tel qu'établi dans la revendication 6.
